# EUROPÄISCHE PATENTSCHRIFT

(11) **EP 2 030 742 B1**
(45) Veröffentlichungstag und Bekanntmachung des Hinweises auf die Patenterteilung: **22.12.2010**
(21) Anmeldenummer: 08015101.2
(22) Anmeldetag: 27.08.2008
(51) Int. Cl.: B25J 15/04

(54) **Werkzeugwechselsystem für einen Industrierobotor**
Tool changing system for an industrial robot
Système de changement d'outil pour un robot industriel

(30) Priorität: 28.08.2007 DE 102007042187
(43) Veröffentlichungstag der Anmeldung: 04.03.2009
(73) Patentinhaber: IPR-Intelligente Peripherien für Roboter GmbH, 74193 Schwaigern (DE)
(72) Erfinder: Philippi, Siegfried,, 75365 Calw (DE); Meier, Stefan,, 71069 Sindelfingen (DE); Stroehlein, Stefan,, 74193 Schwaigern (DE)
(74) Vertreter: Patentanwälte Ruff, Wilhelm, Beier, Dauster & Partner

(56) Entgegenhaltungen:
- GB-A- 2 216 451
- JP-A- 1 234 188
- TONSHOFF H K ET AL: "ROBUSTE WERKZEUGWECHSEL-VORRICHTUNGEN FUR INDUSTRIROBOTER" VDI Z, SPRINGER VDI VERLAG, DUSSELDORF, DE, Bd. 137, Nr. 9, 1. September 1995 (1995-09-01), Seite 47/48,51, XP000526570 ISSN: 0042-1766

## Beschreibung

### Anwendungsgebiet und Stand der Technik

Die Erfindung betrifft ein Werkzeugwechselsystem für einen Industrieroboter mit einer an einem Roboterarm vorgesehenen roboterseitigen Kopplungsvorrichtung, sowie ein Verfahren zum Ankoppeln eines Werkzeugs an einem Roboterarm.

Industrieroboter sind aus dem Stand der Technik allgemein bekannt. Sie werden insbesondere in der Fertigung verwendet und können insbesondere für Aufgaben zweckmäßig verwendet werden, bei denen sich stets identisch wiederholende Arbeitsschritte durchzuführen sind. Derartige Industrieroboter weisen üblicherweise über einen Roboterarm bewegbare und handhabbare Werkzeuge auf, mittels derer die zugeordneten Aufgaben des Industrieroboters verrichtet werden können. Diese Werkzeuge sind vom Anwendungszweck des Industrieroboters abhängig. Zu den besonders gängigen Industrierobotertypen gehören Schweißroboter und Lackierroboter. Aber auch der Austrag von pastösen Medien wie beispielsweise PVC zur flüssigkeitsdichten Verbindung von Blechen ist durch Industrieroboter möglich.

Um bei derartigen Industrierobotern ein erhöhtes Maß an Flexibilität bezüglich der durch sie durchführbaren Arbeitsschritte zu ermöglichen, können die Werkzeuge dieser Industrieroboter austauschbar gestaltet sein. Hierfür sind sowohl an einem Roboterarm des Roboters als auch am Werkzeug Kopplungsvorrichtungen vorgesehen, die in einen gekoppelten und einen ungekoppelten Zustand überführbar sind, um das Werkzeug mit dem Roboter zu verbinden oder von diesem zu lösen. Im nicht genutzten Zustand können die Werkzeuge in einem als Werkzeugmagazin ausgebildeten Werkzeuglager angeordnet sein.

Der Wechsel des Werkzeugs kann im einfachsten Fall manuell erfolgen. Es gibt jedoch auch Wechselsysteme, bei denen der Wechsel dadurch erfolgt, dass entweder das Werkzeug an den Roboterarm oder der Roboterarm an das Werkzeug herangefahren wird und nachfolgend im entsprechend positionierten Zustand eine automatisierte Kopplung erfolgt.

Aus der GB 2 216 451 A ist ein Werkzeugwechselsystem für Industrieroboter bekannt, das eine Lagervorrichtung mit Zustellmitteln in Form eines Schlittens zu Erzeugung einer Relativbewegung zwischen einer roboterseitigen und einer werkzeugseitigen Kopplungsvorrichutng aufweist. Die dabei vorgesehene Funktionsweise sieht vor, dass eine Roboterarm mit einer roboterseitigen Kopplungsvorrichtung und mit angekoppeltem Werkzeug an die Lagervorrichtung herangefahren wird, diese dann ein eingespannten Werkzeug entnimmt und nach Verfahren des Schlittens ein neues Werkzeug an der roboterseitigen Kopplungsvorrichtung ankoppelt.

### Aufgabe und Lösung

Aufgabe der Erfindung ist es, ein Werkzeugwechselsystem für einen Industrieroboter zur Verfügung zu stellen, welches einen besonders zuverlässigen Werkzeugwechsel gestattet, insbesondere auch bei Robotern bzw. Kopplungsvorrichtungen bei denen zur Kopplung eine erhebliche Fügekraft in Kopplungsrichtung aufgebracht werden muss. Diese Aufgabe wird durch ein Werkzeugwechselsystem nach Anspruch 1 erfüllt.

Die Lagervorrichtung eines erfindungsgemäßen Werkzeugwechselsystems kann als einheitliche Baugruppe ausgebildet sein, bei der die Basis, der die Festlegungsmittel sowie Zustellmittel zugeordnet sind, beispielsweise durch ein Lagergestell gebildet wird. Auf diesem Lagergestell können die Festlegungsmittel und die Zustellmittel vorgesehen sein. Die Basis kann jedoch im einfachsten Fall auch durch einen Hallenboden einer Maschinenhalle gebildet werden. Die Festlegungsmittel sind derart ausgebildet, dass sie zum Zwecke eines Werkzeugwechsels die roboterseitige Kopplungsvorrichtung in einer definierten Position zum Werkzeug fixieren können. Sie müssen zu diesem Zweck nicht unmittelbar an der roboterseitigen Kopplungsvorrichtung angreifen, sondern können beispielsweise auch den Roboterarm an einer von der Kopplungsvorrichtung beabstandeten Stelle fixieren. Durch die Festlegungsmittel wird erreicht, dass die im Zuge eines Kopplungsvorgangs auf die roboterseitige Kopplungsvorrichtung wirkenden Kräfte nicht oder nicht alleine durch die Festlegung des Roboterfußes, beispielsweise am Hallenboden, aufgefangen werden müssen. Stattdessen erfolgt der Kraftfluss zumindest zum Teil von der roboterseitigen Kopplungsvorrichtung bis zu dem Punkt des Roboterarms, an dem dieser durch die Festlegungsmittel festgelegt ist und von dort in die Basis der Lagervorrichtung.

Die Festlegungsmittel können so ausgebildet sein, dass sie den Roboterarm und/oder die roboterseitige Kopplungsvorrichtung bezüglich aller drei translativen Freiheitsgrade fixieren. Im Normalfall ist es jedoch ausreichend, dass die Festlegungsmittel zur Festlegung der roboterseitigen Kopplungsvorrichtung in Richtung der Kopplungsrichtung ausgebildet sind. Eine solche Gestaltung, bei der die Festlegungsmittel nur zur Festlegung bezüglich eines oder zweier Freiheitsgrade ausgebildet sind, kann fallweise vorteilhaft sein, da es dadurch möglich ist, den dritten Freiheitsgrad, vorzugsweise die Vertikalbewegung, zum Einführen des Roboterarms in das Festlegungsmittel zu nutzen. Unter der Kopplungsrichtung wird im Zusammenhang mit dieser Erfindung die durch die Gestaltung der Kopplungsvorrichtungen vorgegebene Richtung angesehen, in der die roboterseitige und die werkzeugseitige Kopplungsvorrichtung zum Erreichen ihres aneinander anliegenden Zustandes bewegt werden müssen.

Die Zustellmittel dienen der Relativbewegung der roboterseitigen und werkzeugseitigen Kopplungsvorrichtungen zueinander. Die Zustellmittel können eine einfache Halterung umfassen, die das Werkzeug oder die roboterseitige Kopplungsvorrichtung gegenüber der Basis bewegt. Komplexere und ebenfalls von der Erfindung umfasste Zustellmittel können auch Bewegungen in mehreren Freiheitsgraden ermöglichen und im Extremfall selbst als Roboter- oder Schwenkarm ausgebildet sein, der das Werkzeug an die roboterseitige Kopplungsvorrichtung heranführt.

Die durch die Zustellmittel zu realisierende Relativbewegung zwischen der roboterseitigen Kopplungsvorrichtung und werkzeugseitigen Kopplungsvorrichtung kann dadurch erzielt werden, dass die roboterseitige Kopplungsvorrichtung gegenüber der Basis bewegt wird, während das Werkzeug mit der werkzeugseitigen Kopplungsvorrichtung relativ zur Basis in einer festen Position verbleibt. In einem solchen Fall sind die Festlegungsmittel und die Zustellmittel derart kombiniert, dass mittels der Zustellmittel auch die Festlegung relativ zur Basis bewegt wird, währen die durch die Zustellmittel festgelegte roboterseitige Kopplungsvorrichtung mitgeführt wird. Bevorzugt ist jedoch eine Ausgestaltung, bei der die Festlegungsmittel zur basisfesten Festlegung der roboterseitigen Kopplungsvorrichtung ausgebildet sind und die Zustellmittel zur Bewegung des Werkzeugs relativ zur Basis ausgebildet sind. Dies stellt eine konstruktiv einfache Lösung dar, da nach der Festlegung der roboterseitigen Kopplungsvorrichtung diese gemeinsam mit allen anderen separat beweglichen Abschnitten des Roboters in einer festen Position verbleiben kann und im Zuge der Zustellung nicht bewegt werden muss. Stattdessen wird nach der basisfesten Festlegung der roboterseitigen Kopplungsvorrichtung das Werkzeug und damit die werkzeugseitige Kopplungsvorrichtung an die roboterseitige Kopplungsvorrichtung herangeführt. Die durch das Andrücken des Werkzeugs an die roboterseitige Kopplungsvorrichtung in diese eingeführte Kraft kann dann über die basisfesten Festlegungsmittel in die Basis, beispielsweise also ein Lagergestell oder den Hallenboden, abgeleitet werden.

Die Zustellmittel umfassen vorzugsweise einen Zustellschlitten, der insbesondere vorzugsweise für eine Linearbewegung ausgebildet ist. Der Zustellschlitten bildet dabei eine Auflage, auf der der Roboterarm mitsamt roboterseitiger Kopplungsvorrichtung oder vorzugsweise das Werkzeug mitsamt werkzeugseitiger Kopplungsvorrichtung ruht und mittels derer diese bewegt werden können. Die Ausgestaltung, bei der der Zustellschlitten mittels einer Linearbewegung bewegt werden kann, ist konstruktiv einfach zu realisieren und kostengünstig. Bei einer Ausgestaltung mit einer Lagervorrichtung für mehrere Werkzeuge ist dabei vorzugsweise je Werkzeug jeweils ein separat beweglicher Zustellschlitten vorgesehen. Der Betrieb des Zustellschlittens kann beispielsweise elektrisch, hydraulisch oder pneumatisch erfolgen. Bevorzugt ist eine Ausgestaltung, bei der der Zustellschlitten über einen Pneumatikzylinder bewegbar ist.

Bei einer Weiterbildung der Erfindung weisen die Festlegungsmittel und die roboterseitige Kopplungsvorrichtung zueinander korrespondierende Erhebungen und Ausnehmungen auf, insbesondere zueinander korrespondierende Fixierdorne und Fixierbohrungen, die ein Einsetzen der roboterseitigen Kopplungsvorrichtung auf die Festlegungsmittel in einer von der Kopplungsrichtung abweichende Einsetzrichtung ermöglichen. Die Ausgestaltung mit Erhebungen und Ausnehmungen ist dabei so geartet, dass die Kopplungsvorrichtung oder ein Teil des Roboterarms zumindest abschnittsweise als negatives Abbild einer Formgebung eines Abschnitts des Festlegungsmittels ausgebildet ist. Hierdurch wird ein formschlüssiges Ineinandergreifen der Festlegungsmittel mit dem Roboterarm oder der roboterseitigen Kopplungsvorrichtung erreicht. Die Festlegungsmittel können auf diese Art und Weise ihre Festlegungsfunktion übernehmen, ohne das Bewegungen erforderlich sind, die über die Bewegung des Roboterarms hinausgehen. Alleine durch die Positionierung des Roboterarms in seine Festlegungslage erfolgt bereits die Festlegung. Die Erhebungen und Ausnehmungen sind vorzugsweise derart ausgerichtet, dass die roboterseitige Kopplungsvorrichtung vertikal auf das Festlegungsmittel aufgesetzt werden kann, wobei sich ein in horizontaler Richtung, insbesondere in Kopplungsrichtung wirkender Formschluss ergibt. Besonders vorteilhaft ist die Verwendung von Fixierdornen und Fixierbohrungen, wobei die Fixierdorne vorzugsweise an den Festlegungsmitteln vorgesehen sind und die Fixierbohrungen vorzugsweise an der roboterseitigen Kopplungsvorrichtung vorgesehen sind. Im einfachsten Fall reichen bereits ein Fixierdorn und eine Fixierbohrung. Bevorzugt ist jedoch eine Ausgestaltung mit mehreren Fixierdornen und Fixierbohrungen, die zueinander parallel ausgebildet sind, so dass auch ein Verdrehen der roboterseitigen Kopplungsvorrichtung gegenüber dem Festlegungsmittel unterbunden wird. Die Realisierung über Fixierdorne und Fixierbohrungen stellt eine besonders preisgünstige und zuverlässige Lösung dar. Durch die Ausgestaltung der Fixierdorne mit einer konischen Formgebung kann zusätzlich eine besonders hohe Präzision der Relativstellung des Festlegungsmittels und der roboterseitigen Kopplungsvorrichtung erreicht werden. Statt einer konischen Formgebung können auch zylindrische Fixierdorne mit einer Anphasung verwendet werden. Die formschlüssig wirkenden Ausnehmungen und Erhebungen, insbesondere die Fixierdorne und die Fixierbohrungen, bilden vorzugsweise eine enge Spielpassung.

In ähnlicher Art und Weise weisen bei einer Weiterbildung der Erfindung die Zustellmittel und das Werkzeug zueinander korrespondierende Erhebungen und Ausnehmungen auf, insbesondere zueinander korrespondierende Fixierdorne und Fixierbohrungen, die ein Einsetzen des Werkzeugs auf die Zustellmittel in einer von der Kopplungsrichtung abweichenden Einsatzrichtung ermöglichen. Das Werkzeug, das auf dem Zustellmittel gelagert wird, kann so in seiner Sollposition gehalten werden. Auch diese Fixierdorne und Fixierbohrungen sind vorzugsweise vertikal ausgerichtet, so dass das Werkzeug von dem Zustellmittel nur durch eine Vertikalbewegung nach oben gelöst werden kann. Diese Vertikalbewegung wird durch ein Koppeln des Werkzeugs am Roboterarm und ein nachfolgendes Anheben des Roboterarms möglich. Insbesondere vorteilhaft ist, es wenn die Erhebungen und Ausnehmungen die dem Zustellmittel und dem Festlegungsmittel zugeordnet sind, jeweils in gleiche Richtung ein Einfügen bzw. Ausrücken der roboterseitigen Kopplungsvorrichtung und des Werkzeugs gestatten, da es hierdurch möglich wird, dass die roboterseitige Kopplungsvorrichtung mit angekoppeltem Werkzeug in dieser Richtung gleichzeitig einen Formschluss mit den Festlegungsmitteln und den Zustellmitteln herstellen bzw. lösen kann.

Bei einer Weiterbildung der Erfindung weist die roboterseitigen Kopplungsvorrichtung oder die werkzeugseitige Kopplungsvorrichtung einen sich in Kopplungsrichtung erstreckenden Kopplungsfortsatz auf und die werkzeugseitige Kopplungsvorrichtung bzw. die roboterseitige Kopplungsvorrichtung eine in Kopplungsrichtung offene Kopplungsausnehmung auf, die zur Aufnahme des Kopplungsfortsatzes vorgesehen ist. Die Kopplungsvorrichtungen sind demnach so ausgebildet, dass sie einen Kopplungsfortsatz und eine Kopplungsausnehmung aufweisen, wobei der Kopplungsfortsatz und die Kopplungsausnehmung derart angeordnet und ausgebildet sind, dass der Kopplungsfortsatz im Zuge des Kopplungsvorgangs in die Kopplungsausnehmung einfahren kann.
Hierdurch wird zum einen eine formschlüssige Verbindung der Kopplungsvorrichtungen quer zur Kopplungsrichtung hergestellt und zum anderen eignen sich ein derartiger Kopplungsfortsatz und eine derartige Kopplungsausnehmung sehr gut zur nachfolgenden Herstellung einer formschlüssigen Verbindung in Kopplungsrichtung.

Zu diesem Zweck ist an der Kopplungsausnehmung bei einer Weiterbildung der Erfindung mindestens ein Arretierriegel vorgesehen, der in einem Arretierzustand nach innen in den Kopplungsfortsatz einfahrbar ist oder es ist im Kopplungsfortsatz mindestens Arretierriegel vorgesehen, der in einem Kopplungszustand in eine Wandung der Kopplungsausnehmung einfahrbar ist. Die Beweglichkeit der Arretierriegel ist vorzugsweise in etwa oder genau in einer mit der Kopplungsrichtung einen Winkel von 90° einschließenden Richtung möglich. Bevorzugt ist es, dass die Arretierriegel bezogen auf den Kopplungsfortsatz in radialer Richtung beweglich sind. Die Arretierriegel stellen zwischen den Kopplungsvorrichtungen eine in Kopplungsrichtung formschlüssige Verbindung her. Bevorzugt ist es, dass im Kopplungsfortsatz sich radial erstreckende Ausnehmungen vorgesehen sind, in die von außen einfahrende Arretierriegel einrücken können, um die formschlüssige Verbindung herzustellen. Besonders bevorzugt ist es weiterhin, dass die Arretierriegel zumindest abschnittsweise eine konische Form aufweisen, so dass sie durch das Einfahren in korrespondierende Ausnehmungen der jeweils anderen Kopplungsvorrichtung mit diesem jeweils zur Anlage gelangen und somit eine spielfreie Kopplung ermöglichen. Die Bewegung der Arretierriegel wird vorzugsweise über eine pneumatische oder hydraulische Druckbeaufschlagung realisiert.

Bei einer Weiterbildung der Erfindung ist an der roboterseitigen Kopplungsvorrichtung oder an der werkzeugseitigen Kopplungsvorrichtung mindestens ein vorzugsweise konisch ausgerichteter Ausrichtdorn vorvorgesehen. Weiterhin ist korrespondierend hierzu an der werkzeugseitigen Kopplungsvorrichtung bzw. an der roboterseitigen Kopplungsvorrichtung mindestens eine Ausrichtausnehmung zur Aufnahme des Ausrichtdorns vorgesehen. Der Ausrichtdorn und die Ausrichtausnehmung dienen gemeinsam einer Fixierung der Kopplungsvorrichtungen quer zur Kopplungsrichtung. Sie erstrecken sich zu diesem Zweck in Kopplungsrichtung. Auch der Ausrichtdorn ist vorzugsweise konisch gestaltet, so dass er im vollständig in die Ausnehmung eingerückten Zustand eine spielfreie oder nahezu spielfreie Verbindung herstellt. Durch einen solchen Ausrichtdorn oder mehrere solche Ausrichtdorne sind insbesondere Lagetoleranzen des auf dem Zustellschlitten oder auf dem Zustellmittel gelagerten Werkzeugs ausgleichbar, so dass beim Koppeln eine in hohem Maße reproduzierbare Relativstellung zwischen Werkzeug und Roboterarm erzielbar ist.

Bei einer Weiterbildung der Erfindung sind an der werkzeugseitigen und der roboterseitigen Kopplungsvorrichtung jeweils korrespondierende Anschlüsse für flüssige, pastöse oder gasförmige Arbeitsstoffe und oder Werkstoffe, elektrische Anschlüsse, Signalleitungen und/oder Hydraulik-oder Pneumatikanschlüsse vorgesehen. Hierdurch ist es möglich, neben der mechanischen Kopplung des Werkzeugs mit dem Roboterarm gleichzeitig auch die Versorgungsleitungen miteinander zu koppeln. Die jeweiligen Anschlüsse sind zu diesem Zweck vorzugsweise ebenfalls in Kopplungsrichtung ausgerichtet und korrespondierend zueinander angeordnet. Die Anschlüsse können als korrespondierend zueinander ausgebildete Kupplungen und Strecker vorgesehen sein. Insbesondere bei den Arbeitsstoffen und den Werkstoffen können im einfachsten Fall auch auf beiden Seiten entsprechende Leitungsöffnungen vorgesehen sein, wobei die Leitungsöffnungen vorzugsweise zumindest einseitig von einem Dichtmittel wie einem Dichtring umgeben sind, um das ungewünschte Austreten der Arbeitsstoffe und oder Werkstoffe im Kopplungsbereich zu vermeiden.

Die Erfindung betrifft darüber hinaus ein Verfahren zum Ankoppeln eines Werkzeugs an einen Roboterarm, wobei der Roboterarm in den Bereich von ortsfesten Festlegungsmitteln verfahren wird, die Festlegungsmittel den Roboterarm zumindest hinsichtlich einer translativen Bewegung in einer Kopplungsrichtung fixieren, eine zu den Festlegungsmitteln in Kopplungsrichtung relativbewegliche Zustelleinrichtung relativ zum Festlegungsmittel verfahren wird, so dass ein durch die Zustelleinrichtung bewegliches Werkzeug mittels einer werkzeugseitigen Kopplungseinrichtung an eine roboterseitige Kopplungseinrichtung heran bewegt wird, und die werkzeugseitige Kopplungseinrichtung mit der roboterseitigen Kopplungseinrichtung vorzugsweise formschlüssig gekoppelt wird.

Die ortsfesten Festlegungsmittel sind dabei insofern ortsfest, dass sie zumindest relativ zu einem feststehenden Abschnitt eines Zustellmittels, dem die Zustelleinrichtung zugeordnet ist, in einer festen Relativlage angeordnet sind. Vorzugsweise sind sie weiterhin bezogen auf einen Basisabschnitt des Roboters, mittels dessen dieser ortsfest aufgestellt ist, in einer festen Relativlage.

Die Besonderheit des Verfahrens liegt darin, dass der Kraftfluss beim aufeinandertreffen der Kopplungsvorrichtung des Werkzeugs und des Roboterarms zumindest teilweise nicht durch den ortsfesten Basisab-schnitt des Roboters erfolgt. Stattdessen erfolgt der Kraftfluss unmittelbar von den Festlegungsmitteln in die Zustellmittel, die die Zustelleinrichtung umfassen. Eine Kraftbeaufschlagung des Roboters, die gegebenenfalls zu einer ungewünschten Verlagerung des Roboters führen könnte, wird dadurch vermindert oder vermieden.

### Kurzbeschreibung der Zeichnungen

Weitere Vorteile und Merkmale ergeben sich aus den Ansprüchen sowie einem Ausführungsbeispiel das nachfolgend anhand der Zeichnungen dargestellt ist. Dabei zeigen:
- Figur 1: eine Lagervorrichtung eines erfindungsgemäßen Werkzeugwechselsystems für einen Industrieroboter,
- Figur 2: das gesamte Werkzeugwechselsystem für einen Industrieroboter mit der in Figur 1 dargestellten Lagervorrichtung, bestückt mit zwei Werkzeugen, sowie mit einer roboterseitigen Kopplungsvorrichtung,
- Figur 3 bis 5: den Kopplungsvorgang der roboterseitigen Kopplungsvorrichtung an einem der auf der Lagervorrichtung vorgesehenen Werkzeuge und
- Figur 6: eine geschnittene Darstellung der roboterseitigen und werkzeugseitigen Kopplungsvorrichtungen in einer geschnittenen Darstellung.

### Detaillierte Beschreibung des Ausführungsbeispiels

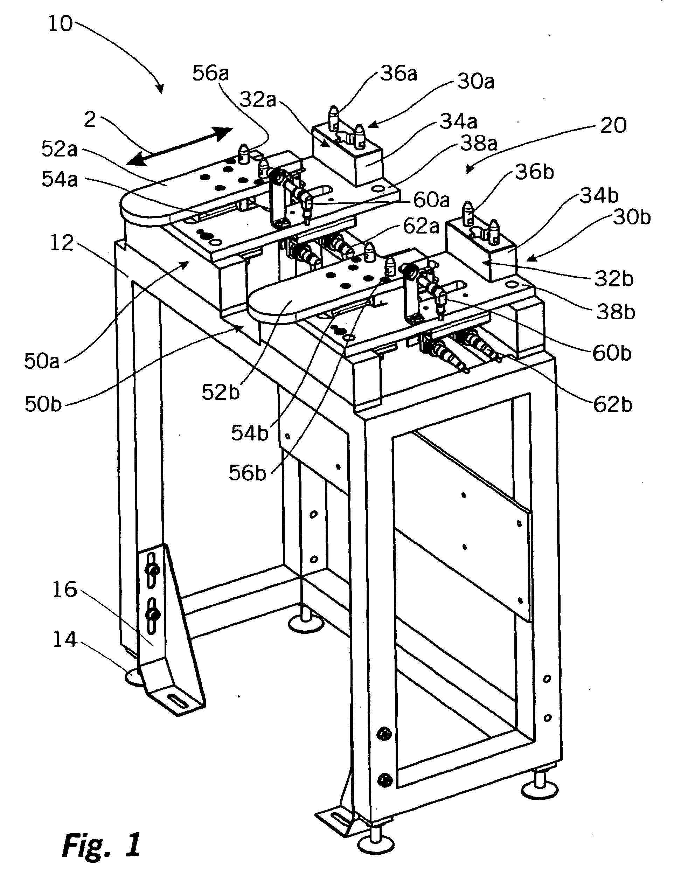

Figur 1 zeigt eine Lagervorrichtung eines erfindungsgemäßen Werkzeugwechselsystems. Diese Lagervorrichtung 10 besteht aus einem Gestell 12 sowie den unmittelbar für den Kopplungsvorgang vorgesehenen Funktionsbauteilen 20. Das Gestell 12 weist höhenverstellbare Füße 14 auf und ist mittels Befestigungswinkeln 16 mit einem Untergrund, beispielsweise einem Hallenboden, durch Verschraubungen fest verbindbar.

Die am Kopplungsvorgang unmittelbar beteiligten Funktionsbauteile 20 umfassen zwei Baugruppen 30a, 30b, die jeweils zur Aufnahme und Handhabung eines Werkzeugs vorgesehen sind. Jede dieser Baugruppen 30a, 30b weist auf ihrer in der Perspektive der Figuren 1 bis 5 rechten Seite Festlegungsmittel 32a, 32b auf. Diese Festlegungsmittel 32a, 32a umfassen jeweils einen Auflageblock 34a, 34b, von dem aus sich jeweils zwei Fixierdorne 36a, 36b vertikal nach oben erstrecken. Die Auflageblöcke 34a, 34b und mit ihnen die damit festverbundenen Fixierdorne 36a, 36b sind jeweils fest an Basisplatten 38a, 38b befestigt, die wiederum fest mit dem Gestell 12 fest verbunden ist.

Linksseitig der Festlegungsmittel 32a, 32b sind Zustellmittel 50a, 50b vorgesehen. Diese Zustellmittel 50a, 50b umfassen im Einzelnen jeweils einen Zustellschlitten 52a, 52b, der in einer Zustellrichtung 2 linear beweglich ist. Die Zustellschlitten 52a, 52b können separat von einander jeweils mittels eines Pneumatikzylinders 54a, 54b verschoben werden. Die Zustellschlitten 52a, 52b weisen jeweils eine flache Auflagefläche auf, von der sich ähnlich den Auflageblöcken 34a, 34b jeweils zwei Fixierdorne 56a, 56b vertikal nach oben erstrecken.

Zu jedem Zustellschlitten 52 sind insgesamt drei Sensoren 60a, 60b, 62a, 62b zugeordnet, wobei die Sensoren 60a, 60b jeweils als optische Sensoren ausgebildet sind, mittels derer ermittelt werden kann, ob auf den Zustellschlitten 52 ein Werkzeug gelagert ist. Die Sensoren 62a, 62b hingegen sind als induktive Sensoren ausgebildet, mittels derer die Position des Zustellschlittens erfasst werden kann.

In nicht dargestellter Art und Weise sind diese Sensoren 60a, 60b, 62a, 62b mit einem Steuergerät verbunden, welches auch die Steuerung eines der Lagervorrichtung zugeordneten Roboters sowie der Pneumatikzylinder 54a, 54b übernimmt.

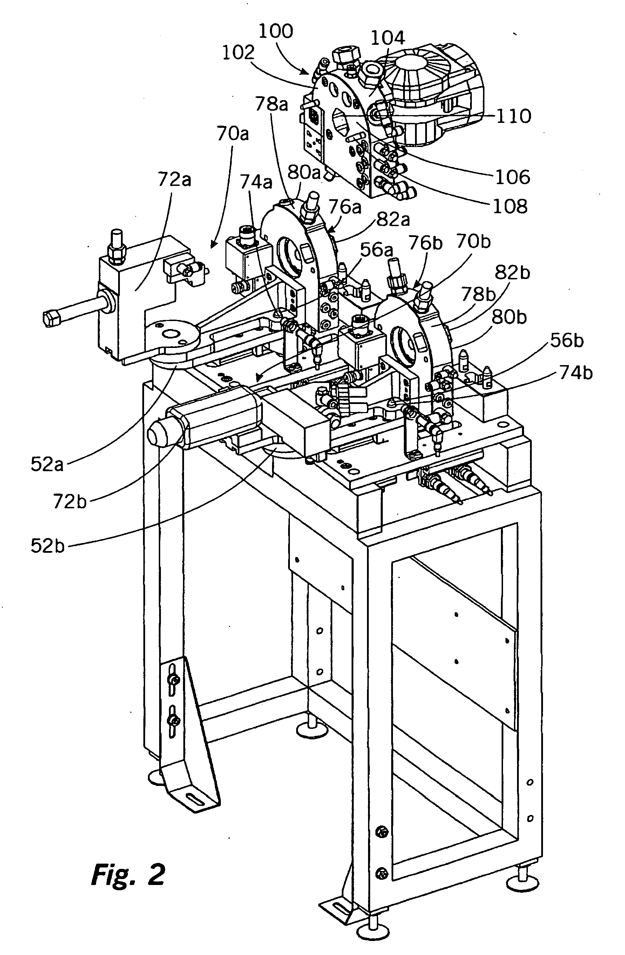

Figur 2 zeigt die Lagervorrichtung der Figur 1 in einem bestückten Zustand. In diesem bestückten Zustand ist auf jedem der Zustellschlitten 52a, 52b jeweils ein Werkzeug 70a, 70b vorgesehen, wobei im vorliegenden Fall, bei dem es sich lediglich um ein bevorzugtes Beispiel handelt, die Werkzeuge als Austragwerkzeuge für pastöse Medien ausgebildet sind. Die Werkzeuge 70a, 70b weisen jeweils eine Reihe von werkzeugspezifischen Komponenten 72a, 72b auf. Beiden Werkzeugen 70a, 70b ist gemein, dass sie an einem Ausleger jeweils zwei Fixierbohrungen 74a, 74b aufweisen, wobei jeweils nur eine diese Fixierbohrungen 74a, 74b in der Fig. 2 zu erkennen ist. Durch diese Fixierbohrungen 74a, 74b ragen die Fixierdorne 56a, 56b der Zustellschlitten 52a, 52b hindurch und führen zu einer stabilen horizontal formschlüssigen Koppelung der Werkzeuge 70a, 70b an die Zustellschlitten 52a, 52b.

Den Werkzeugen 70a, 70b ist weiterhin gemein, dass sie jeweils auf ihrer rechtsseitigen, den Festlegungsmitteln 32a, 32b zugewandten Seite eine Kopplungsvorrichtung 76a, 76b aufweisen. Die Kopplungsvorrichtungen 76a, 76b der Werkzeuge 70a, 70b sind jeweils als senkrecht stehende Kopplungsplatten ausgebildet, an deren Mantelseiten 78a, 78b eine Vielzahl von Anschlüssen für Druckluft, Werkstoffe und Arbeitsstoffe vorgesehen sind. Diese Anschlüsse können in nicht näher dargestellter Art und Weise mittels Kabel- und Schlauchverbindungen mit den werkzeugspezifischen Komponenten 72a, 72b der Werkzeuge 70a, 70b verbunden werden. Innerhalb der Kopplungsvorrichtungen 76a, 76b sind diese Anschlüsse mittels Verbindungskanälen und -leitungen mit Anschlüssen verbunden, die in der Figur 2 nicht entnehmbarer Art und Weise in Richtung der Auflageblöcke 34a, 34b weisen. Diese Anschlüsse sind jeweils auf einer zumindest abschnittsweise planen Kontaktfläche 80a, 80b der Kopplungsvorrichtung 76a, 76b vorgesehen, die in Richtung der Festlegungsmittel 32a, 32b weist. Die weitgehend planen Kontaktfläche 80a, 80b der Kopplungsvorrichtungen 76a, 76b weisen jeweils darüber hinaus einen Kopplungsfortsatz 82a, 82b auf, der in etwa die Form eines Sechskants hat und sich ebenfalls in Richtung der Festlegungsmittel 32a, 32b von den Kopplungsflächen 80a, 80b aus erstreckt.

In der Darstellung der Figur 2 ist weiterhin ein Teil eines Roboterarms mit einer am Roboterarm vorgesehenen roboterseitigen Kopplungsvorrichtung 100 dargestellt. Diese roboterseitige Kopplungsvorrichtung 100 weist ebenfalls eine im Wesentlichen senkrecht ausgerichtete Kopplungsplatte 102 auf. Ähnlich der werkzeugseitigen Kopplungsvorrichtung 76a, 76b sind auf einer Mantelfläche 104 dieser Kopplungsvorrichtung 100 eine Vielzahl von Anschlüssen für Arbeitsstoffe, Werkstoffe, Druckluft und elektrische Signale vorgesehen. In nicht näher dargestellter Art und Weise sind diese Anschlüsse mit entsprechenden Versorgungskabeln und Leitungen am Roboter verbunden. Die jeweiligen Anschlüsse münden ähnlich der werkzeugseitigen Kopplungsvorrichtung im Bereich einer planen Kontaktfläche 106, wobei die Anordnung der dort mündenden Anschlüsse spiegelbildlich der nicht dargestellten Anordnung der Anschlüsse auf der jeweiligen planen Kontaktfläche 80a, 80b der werkzeugseitigen Kopplungsvorrichtungen 76a, 76b entspricht.

Ebenfalls korrespondierend zu nicht dargestellten Ausrichtausnehmungen im Bereich der planen Kontaktflächen 80a, 80b der werkzeugseitigen Kopplungsvorrichtungen 76a, 76b sind Ausrichtdorne 108 an der planen Kontaktfläche 106 der roboterseitigen Kopplungsvorrichtung 100 vorgesehen.

Korrespondierend zum den Kopplungsfortsätzen 82a, 82b ist in der roboterseitigen Kopplungsvorrichtung 100 eine Kopplungsausnehmung 110 vorgesehen, die so bemessen ist, dass sie die Kopplungsfortsätze 82a, 82b aufnehmen kann.

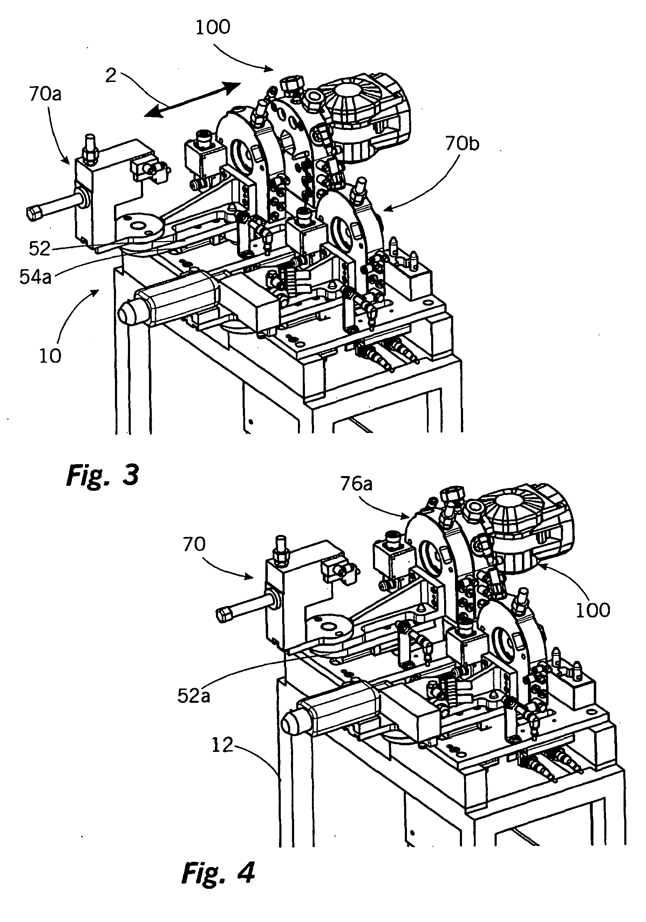

Bei der Darstellung der Figur 2 befindet sich der Roboterarm mit der roboterseitigen Kopplungsvorrichtung 100 bereits oberhalb der Lagervorrichtung 10 mit den auf ihr gelagerten Werkzeugen 70a, 70b. Aus dieser Lage der Figur 2 wird die Kopplungsvorrichtung mittels der Bewegungsfreiheit des Roboterarms nach unten verfahren, so dass die Kopplungsvorrichtung 100 auf dem linken Auflageblock 34a zum Aufliegen kommt. Die Fixierdornen 36a am Auflageblock 34a erstrecken sich in dieser in Figur 3 dargestellten aufgesetzten Lage in nicht dargestellte korrespondierende Fixierausnehmungen an der Unterseite der roboterseitigen Kopplungsvorrichtung 100. Dies führt dazu, dass in der in Figur 3 dargestellten Lage eine formschlüssige Verbindung zwischen der Lagervorrichtung 10 und der roboterseitigen Kopplungsvorrichtung 100 in Kopplungsrichtung 2 besteht. Die roboterseitige Kopplungsvorrichtung 100 kann dem zufolge nur durch vertikale Verlagerung wieder aus dem Eingriff der Fixierdorne 36a entfernt werden.

Nach Erreichen der in Figur 3 dargestellten Zwischenstellung wird durch Betätigung des Pneumatikzylinders 54a der Zustellschlitten 52a in Kopplungsrichtung 2 in Richtung der roboterseitigen Kopplungsvorrichtung verschoben. Die Ausrichtdorne 108 an der roboterseitigen Kopplungsvorrichtung und die korrespondierenden nicht dargestellten Ausrichtausnehmungen an der werkzeugseitigen Kopplungsvorrichtung führen dabei zu einer genauen Ausrichtung des Werkzeugs und des Roboterarms relativ zueinander. Sobald dabei die Kontaktfläche 80a der werkzeugseitigen Kopplungsvorrichtung 76a an die Kontaktfläche 106 der roboterseitigen Kopplungsvorrichtung 100 anstößt, wird die werkzeugseitige Kopplungsvorrichtung 76a gegen die roboterseitige Kopplungsvorrichtung 100 gepresst. Die auf die roboterseitige Kopplungsvorrichtung 100 wirkende Kraft wird dabei nicht in den Roboter eingeleitet, sondern über die Fixierdornen 36a und den Auflageblock 34a in das Gestell 12 eingeleitet.

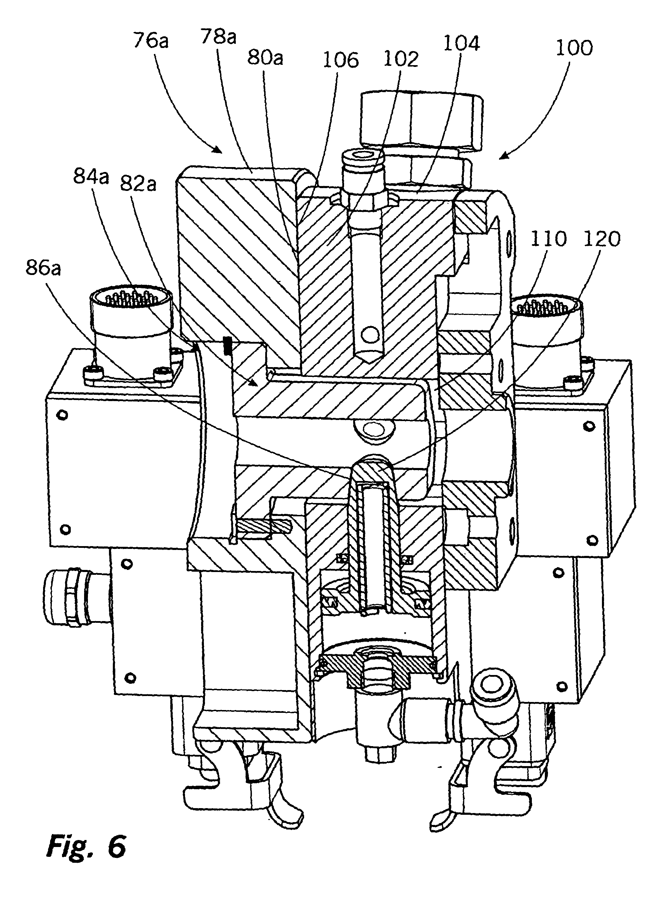

In der in damit erreichten Lage, die in Figur 4 dargestellt ist, wird nach Erreichen der gewünschten Relativlage zwischen der roboterseitige Kopplungsvorrichtung 100 und der werkzeugseitigen Kopplungsvorrichtung 76a eine Verriegelung der Kopplungsvorrichtungen 76a, 100 vorgenommen, die im Folgenden noch zu Figur 6 näher erläutert ist. Nach Herstellen dieser Verriegelung sind die Kopplungsvorrichtung 76a, 100 fest miteinander Verbunden. Die jeweiligen Kanäle zum Transport von Arbeitsstoffen, Werkstoffen, Pneumatik- und Hydraulikmedium sowie die elektrischen Leitungen sind in diesem Zustand ebenfalls kontaktiert.

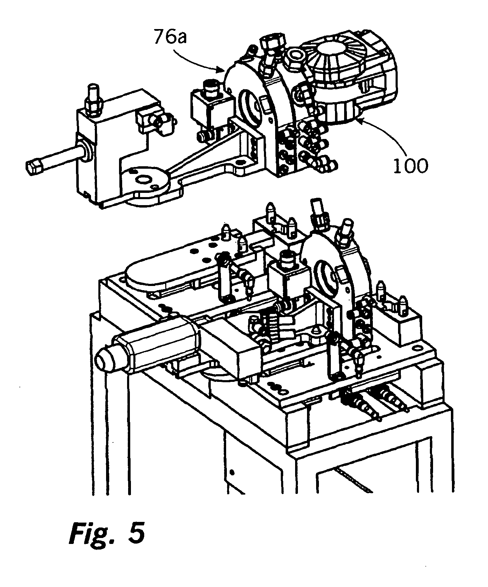

Ausgehend von der Lage von Figur 4 wird anschließend der Roboterarm zusammen mit dem nunmehr mit ihm gekoppelten Werkzeug 70a vertikal angehoben, so dass das Werkzeug 70a vom Zustellschlitten 52a gelöst wird. Der Roboter mit dem jetzt angekoppelten Werkzeug erreicht dadurch den in Fig. 5 dargestellten gewünschten Einsatzzustand.

Figur 6 zeigt in einer geschnittenen Darstellung die Kopplungsvorrichtungen 76a, 100 des Werkzeugs 70a bzw. des Roboterarms im gekoppelten Zustand. In der werkzeugseitigen Kopplungsvorrichtung 76a ist eine kreisrunde Durchbrechung 84a vorgesehen, in die der Kopplungsfortsatz 82a eingeschoben und dort drehfest fixiert ist. Der Kopplungsfortsatz erstreckt sich in Richtung der roboterseitigen Kopplungsvorrichtung 100 und ragt dabei über die Kontaktfläche 80a der werkzeugseitigen Kopplungsvorrichtung 76a hinaus. In einem sich über die Kontaktfläche 80a hinaus erstreckenden Abschnitt des Kopplungsfortsatzes 82a sind an der Außenseite insgesamt drei sich konisch nach innen verjüngende Ausnehmungen 86a vorgesehen. In dem in Figur 6 dargestellten gekoppelten Zustand ist in diese Ausnehmungen 86 jeweils ein Arretierriegel 120 eingeschoben, wobei die Arretierriegel 120 jeweils in der roboterseitigen Kopplungsvorrichtung radial verschieblich gelagert sind und jeweils hydraulisch radial nach innen kraftbeaufschlagbare sind.

Der dargestellte Kopplungsmechanismus gewährleistet eine feste und betriebssichere Verbindung der Kopplungsvorrichtungen des Roboters und des Werkzeugs.

## Patentansprüche

1. Werkzeugwechselsystem für einen Industrieroboter mit
- einer an einem Roboterarm vorgesehenen roboterseitigen Kopplungsvorrichtung (100),
- mindestens einem an die roboterseitige Kopplungsvorrichtung (100) ankoppelbarem Werkzeug (70a, 70b) mit einer werkzeugseitigen Kopplungsvorrichtung (76a, 76b) und
- einer Lagervorrichtung (10) zur Aufnahme des mindestens einen Werkzeugs (76a, 76b) im nicht gekoppelten Zustand,
wobei die Lagervorrichtung
- eine Basis (12),
- Festlegungsmittel (32a, 32b) zur Festlegung der roboterseitigen Kopplungsvorrichtung (100) und
- Zustellmittel (50a, 50b), die zur Erzeugung einer Relativbewegung der roboterseitigen Kopplungsvorrichtung (100) und der werkzeugseitigen Kopplungsvorrichtung (76a, 76b) zueinander in einer Kopplungsrichtung (2) ausgebildet sind,
umfasst.

2. Werkzeugwechselsystem nach Anspruch 1,
**dadurch gekennzeichnet, dass**
die Festlegungsmittel (32a, 32b) zur Festlegung der roboterseitigen Kopplungsvorrichtung (100) zumindest in Richtung einer Kopplungsrichtung (2) ausgebildet sind.

3. Werkzeugwechselsystem nach Anspruch 1 oder 2,
**dadurch gekennzeichnet, dass**
die Festlegungsmittel (32a, 32b) zur basisfesten Festlegung der roboterseitigen Kopplungsvorrichtung (100) ausgebildet sind und die Zustellmittel (50a, 50b) zur Bewegung des Werkzeugs (70a, 70b) relativ zur Basis (12) ausgebildet sind.

4. Werkzeugwechselsystem nach einem der vorstehenden Ansprüche,
**dadurch gekennzeichnet, dass**
die Zustellmittel (50a, 50b) einen Zustellschlitten (52a, 52b) aufweisen, der vorzugsweise für eine Linearbewegung ausgebildet ist.

5. Werkzeugwechselsystem nach Anspruch 4,
**dadurch gekennzeichnet, dass**
die Festlegungsmittel (32a, 32b) und die roboterseitige Kopplungsvorrichtung (100) zueinander korrespondierende Erhebungen (36a, 36b) und Ausnehmungen aufweisen, insbesondere zueinander korrespondierende Fixierdorne (36a, 36b) und Fixierbohrungen, die ein Einsetzen der roboterseitigen Kopplungsvorrichtung (100) auf die Festlegungsmittel (32a, 32b) in einer von der Kopplungsrichtung (2) abweichenden Einsetzrichtung ermöglichen.

6. Werkzeugwechselsystem nach einem der vorstehenden Ansprüche,
**dadurch gekennzeichnet, dass**
die Zustellmittel (50a, 50b) und das Werkzeug (70a, 70b) zueinander korrespondierende Erhebungen (56a, 56b) und Ausnehmungen (74a, 74b) aufweisen, insbesondere zueinander korrespondierend Fixierdorne (56a, 56b) und Fixierbohrungen (74a, 74b), die ein Einsetzen des Werkzeugs (70a, 70b) auf die Zustellmittel (50a, 50b) in einer von der Kopplungsrichtung (2) abweichenden Einsetzrichtung ermöglichen.

7. Werkzeugwechselsystem nach einem der vorstehenden Ansprüche,
**dadurch gekennzeichnet, dass**
die roboterseitige Kopplungsvorrichtung oder die werkzeugseitige Kopplungsvorrichtung (76a, 76b) einen sich in Kopplungsrichtung (2) erstreckenden Kopplungsfortsatz (82a, 82b) aufweisen und die werkzeugseitige Kopplungsvorrichtung bzw. die roboterseitigen Kopplungsvorrichtung (100) eine in Kopplungsrichtung (2) offene Kopplungsausnehmung (110) aufweist, die zur Aufnahme des Kopplungsfortsatzes (82a, 82b) vorgesehen ist.

8. Werkzeugwechselsystem nach Anspruch 7,
**dadurch gekennzeichnet, dass**
an der Kopplungsausnehmung (100) mindestens ein Arretierriegel (120) vorgesehen ist, der in einem Arretierzustand nach innen in den Kopplungsfortsatz (82a, 82b) einfahrbar ist oder dass im Kopplungsfortsatz mindestens ein Arretierriegel vorgesehen ist, der in einem Kopplungszustand in eine Wandung der Kopplungsausnehmung einfahrbar ist.

9. Werkzeugwechselsystem nach einem der vorstehenden Ansprüche,
**dadurch gekennzeichnet, dass**
an der roboterseitigen Kopplungsvorrichtung (100) oder an der werkzeugseitigen Kopplungsvorrichtung mindestens ein vorzugsweise konisch ausgerichteter Ausrichtdorn (108) vorgesehen ist und dass korrespondierend hierzu an der werkzeugseitigen Kopplungsvorrichtung (76a, 76b) bzw. an der roboterseitigen Kopplungsvorrichtung mindestens eine Ausrichtausnehmungen zur Aufnahme des Ausrichtdorns vorgesehen ist.

10. Werkzeugwechselsystem nach einem der vorstehenden Ansprüche,
**dadurch gekennzeichnet, dass**
an der werkzeugseitigen und der roboterseitigen Kopplungsvorrichtung (76a, 76b, 100) jeweils korrespondierende Anschlüsse für flüssige, pastöse oder gasförmige Arbeitsstoffe und/oder Werkstoffe, elektrische Anschlüsse, Signalleitungen und/oder Hydraulik oder Pneumatikanschlüsse vorgesehen sind.

11. Verfahren zum Ankoppeln eines Werkzeugs (76a, 76b) an einen Roboterarm (100),
bei dem
a. der Roboterarm (100) in den Bereich von ortsfesten Festlegungsmitteln (32a, 32b) verfahren wird,
b. die Festlegungsmittel (32a, 32b) den Roboterarm (100) zumindest hinsichtlich einer translativen Bewegung in einer Kopplungsrichtung (2) fixieren,
c. eine zu den Festlegungsmitteln (32a, 32b) in Kopplungsrichtung (2) relativbewegliche Zustelleinrichtung (52a, 52b) relativ zum Festlegungsmittel (32a, 32b) verfahren wird, so dass ein durch die Zustelleinrichtung (52a, 52b) bewegliches Werkzeug (70a, 70b) mittels einer werkzeugseitigen Kopplungseinrichtung (76a, 76b) an eine roboterseitigen Kopplungseinrichtung (100) heranbewegt wird, und
d. die werkzeugseitige Kopplungseinrichtung (76a, 76b) mit der roboterseitigen Kopplungseinrichtung (100) vorzugsweise formschlüssig gekoppelt wird.

## Claims

1. Tool change system for an industrial robot having
- a robot-side coupling device (100) provided on a robot arm,
- at least one tool (70a, 70b) that can be coupled to the robot-side coupling device (100) with a tool-side coupling device (76a, 76b) and
- a mounting device (10) for receiving the at least one tool (76a, 76b) in the non-coupled state,
where the mounting device comprises
- a base (12),
- fixing means (32a, 32b) for fixing of the robot-side coupling device (100) and
- feeding means (50a, 50b) designed for generating a relative movement of the robot-side coupling device (100) and the tool-side coupling device (76a, 76b) to one another in a coupling direction (2).

2. Tool change system according to Claim 1,
**characterized in that**
the fixing means (32a, 32b) are designed for fixing of the robot-side coupling device (100) at least in the direction of a coupling direction (2).

3. Tool change system according to Claim 1 or 2,
**characterized in that**
the fixing means (32a, 32b) are designed for fixing of the robot-side coupling device (100) stationary to the base and the feeding means (50a, 50b) are designed for movement of the tool (70a, 70b) relative to the base (12).

4. Tool change system according to one of the preceding claims,
**characterized in that**
the feeding means (50a, 50b) have a feeding slide (52a, 52b) which is preferably designed for a linear movement.

5. Tool change system according to Claim 4,
**characterized in that**
the fixing means (32a, 32b) and the robot-side coupling device (100) have elevations (36a, 36b) and recesses corresponding to one another, in particular fixing mandrels (36a, 36b) and fixing holes corresponding to one another and permitting an insertion of the robot-side coupling device (100) on the fixing means (32a, 32b) in an insertion direction differing from the coupling direction (2).

6. Tool change system according to one of the preceding claims,
**characterized in that**
the feeding means (50a, 50b) and the tool (70a, 70b) have elevations (56a, 56b) and recesses (74a, 74b) corresponding to one another, in particular fixing mandrels (56a, 56b) and fixing holes (74a, 74b) corresponding to one another and permitting an insertion of the tool (70a, 70b) on the feeding means (50a, 50b) in an insertion direction differing from the coupling direction (2).

7. Tool change system according to one of the preceding claims,
**characterized in that**
the robot-side coupling device or the tool-side coupling device (76a, 76b) have a coupling projection (82a, 82b) extending in the coupling direction (2), and the tool-side coupling device or the robot-side coupling device (100) has a coupling recess (110) open in the coupling direction and intended for receiving the coupling projection (82a, 82b).

8. Tool change system according to Claim 7,
**characterized in that**
at least one locking bar (120) is provided on the coupling recess (100) which in a locked state can be moved inwards into the coupling projection (82a, 82b), or **in that** at least one locking bar is provided in the coupling projection which in a coupled state can be moved into a wall of the coupling recess.

9. Tool change system according to one of the preceding claims,
**characterized in that**
at least one preferably conically aligned aligning mandrel (108) is provided on the robot-side coupling device (100) or on the tool-side coupling device, and **in that** corresponding thereto at least one aligning recess is provided on the tool-side coupling device (76a, 76b) or on the robot-side coupling device for receiving the aligning mandrel.

10. Tool change system according to one of the preceding claims,
**characterized in that**
the tool-side and the robot-side coupling devices (76a, 76b, 100) are each provided with corresponding connections for liquid, pasty or gaseous working substances and/or materials, electrical connections, signal cables and/or hydraulic or pneumatic connections.

11. Method for coupling a tool (76a, 76b) to a robot arm (100),
where
a. the robot arm (100) is moved into the area of stationary fixing means (32a, 32b),
b. the fixing means (32a, 32b) fix the robot arm (100) at least with regards to a translatory movement in one coupling direction (2),
c. a feeding device (52a, 52b) movable relative to the fixing means (32a, 32b) in the coupling direction (2) is moved relative to said fixing means (32a, 32b) such that a tool (70a, 70b) movable by the feeding device (52a, 52b) is moved up to a robot-side coupling device (100) by means of a tool-side coupling device (76a, 76b), and
d. the tool-side coupling device (76a, 76b) is coupled to the robot-side coupling device (100) preferably in a positive connection.

## Revendications

1. Système de changement d'outil pour un robot industriel avec
- un dispositif de couplage côté robot (100) prévu sur un bras de robot,
- au moins un outil (70a, 70b) pouvant être couplé au dispositif de couplage côté robot (100) avec un dispositif de couplage côté outil (76a, 76b), et
- un dispositif de réception (10) pour loger l'outil (76a, 76b) au moins en présence à l'état non couplé,
sachant que le dispositif de réception comprend
- une base (12),
- des moyens de fixation (32a, 32b) pour immobiliser le dispositif de couplage côté robot (100), et
- des moyens d'amenée (50a, 50b) conçus pour produire un mouvement relatif du dispositif de couplage côté robot (100) et du dispositif de couplage côté outil (76a, 76b) l'un par rapport à l'autre dans un sens de couplage (2).

2. Système de changement d'outil selon la revendication 1,
**caractérisé en ce que**
les moyens de fixation (32a, 32b) pour l'immobilisation du dispositif de couplage côté robot (100) sont conçus au moins en direction d'un sens de couplage (2).

3. Système de changement d'outil selon la revendication 1 ou 2,
**caractérisé en ce que**
les moyens de fixation (32a, 32b) sont conçus pour l'immobilisation fixe sur la base du dispositif de couplage côté robot (100), et que les moyens d'amenée (50a, 50b) sont conçus pour le mouvement de l'outil (70a, 70b) par rapport à la base (12).

4. Système de changement d'outil selon l'une des revendications précédentes,
**caractérisé en ce que**
les moyens d'amenée (50a, 50b) présentent un chariot d'amenée (52a, 52b) qui est de préférence conçu pour opérer un mouvement linéaire.

5. Système de changement d'outil selon la revendication 4,
**caractérisé en ce que**
que les moyens de fixation (32a, 32b) et le dispositif de couplage côté robot (100) présentent des évidements et des élévations (36a, 36b) correspondant les uns aux autres, en particulier des orifices de blocage et des mandrins de blocage (36a, 36b) correspondant les uns aux autres et permettant une mise en place du dispositif de couplage côté robot (100) sur les moyens de fixation (32a, 32b) dans un sens d'installation différent du sens de couplage (2).

6. Système de changement d'outil selon l'une des revendications précédentes,
**caractérisé en ce que**
les moyens d'amenée (50a, 50b) et l'outil (70a, 70b) présentent des évidements (74a, 74b) et des élévations (56a, 56b) correspondant les uns aux autres, en particulier des orifices de blocage (74a, 74b) et des mandrins de blocage (56a, 56b) correspondant les uns aux autres et permettant une mise en place de l'outil (70a, 70b) sur les moyens d'amenée (50a, 50b) dans un sens d'installation différent du sens de couplage (2).

7. Système de changement d'outil selon l'une des revendications précédentes,
**caractérisé en ce que**
le dispositif de couplage côté robot ou le dispositif de couplage côté outil (76a, 76b) présente un appendice de couplage (82a, 82b) s'étendant dans le sens de couplage (2), et que le dispositif de couplage côté outil ou le dispositif de couplage côté robot (100) présente un évidement de couplage (110) ouvert dans le sens de couplage (2) prévu pour recevoir l'appendice de couplage (82a, 82b).

8. Système de changement d'outil selon la revendication 7,
**caractérisé en ce que**
est prévu dans l'évidement de couplage (100) au moins un verrou d'arrêt (120) qui, en état d'arrêt, peut être introduit vers l'intérieur dans l'appendice de couplage (82a, 82b), ou qu'est prévu dans l'appendice de couplage au moins un verrou d'arrêt qui, en état de couplage, peut être introduit dans une paroi de l'évidement de couplage.

9. Système de changement d'outil selon l'une des revendications précédentes,
**caractérisé en ce que**
au moins un mandrin d'alignement (108) orienté de préférence de manière conique est prévu sur le dispositif de couplage côté robot (100) ou sur le dispositif de couplage côté outil, et qu'au moins un évidement d'alignement est prévu de manière correspondante au mandrin sur le dispositif de couplage côté outil (76a, 76b) ou sur le dispositif de couplage côté robot pour recevoir le mandrin d'alignement.

10. Système de changement d'outil selon l'une des revendications précédentes,
**caractérisé en ce que**
des branchements respectivement correspondants pour des substances et/ou des matériaux liquides, pâteux ou gazeux, des connecteurs électriques, des lignes de signal et/ou des raccords hydrauliques ou pneumatiques sont prévus sur le dispositif de couplage côté outil et côté robot (76a, 76b, 100).

11. Procédé de couplage d'un outil (76a, 76b) à un bras de robot (100),
dans lequel
a. le bras de robot (100) est amené dans la zone des moyens de fixation stationnaires (32a, 32b),
b. les moyens de fixation (32a, 32b) fixent le bras de robot (100) au moins en ce qui concerne un mouvement en translation dans un sens de couplage (2),
c. un dispositif d'amenée (52a, 52b) se déplaçant par rapport aux moyens de fixation (32a, 32b) dans le sens de couplage (2) est déplacé par rapport au moyen de fixation (32a, 32b), de telle manière qu'un outil (70a, 70b) pouvant être déplacé par l'intermédiaire du dispositif d'amenée (52a, 52b) est rapproché d'un dispositif de couplage côté robot (100) au moyen d'un dispositif de couplage côté outil (76a, 76b), et
d. le dispositif de couplage côté outil (76a, 76b) est couplé de préférence par complémentarité de forme au dispositif de couplage côté robot (100).
